# EUROPÄISCHE PATENTSCHRIFT

(11) **EP 1 051 701 B1**
(45) Veröffentlichungstag und Bekanntmachung des Hinweises auf die Patenterteilung: **06.11.2002**
(21) Anmeldenummer: 98966592.2
(22) Anmeldetag: 30.12.1998
(51) Int. Cl.: G10L 15/06

(54) **VERFAHREN ZUM ÜBERMITTELN VON SPRACHDATEN**
METHOD FOR VOICE DATA TRANSMISSION
PROCEDE DE TRANSMISSION DE DONNEES VOCALES

(30) Priorität: 03.02.1998 DE 19804189
(43) Veröffentlichungstag der Anmeldung: 15.11.2000
(73) Patentinhaber: SIEMENS AKTIENGESELLSCHAFT, 80333 München (DE)
(72) Erfinder: HÜNLICH, Klaus, D-85467 Neuching (DE); FRAAS, Wolfgang, D-82515 Wolfratshausen (DE)
(86) Internationale Anmeldenummer: DE9803812
(87) Internationale Veröffentlichungsnummer: WO99040568

(56) Entgegenhaltungen:
- EP-A- 0 071 716
- EP-A- 0 706 172
- WO-A-96/00962
- MAERAN O ET AL: "SPEECH RECOGNITION THROUGH PHONEME SEGMENTATION AND NEURAL CLASSIFICATION" IMTC-97: IEEE INSTRUMENTATION/MEASUREMENT TECHNOLOGY CONFERENCE, OTTAWA, CANADA, Bd. 2, 19. - 21. Mai 1997, Seiten 1215-1220, XP000730875 INSTITUTE OF ELECTRICAL AND ELECTRONICS ENGINEERS
- HAMPSHIRE II J B ET AL: "THE META-PI NETWORK: CONNECTIONIST RAPID ADAPTATION FOR HIGH-PERFORMANCE MULTI-SPEAKER PHONEME RECOGNITION" ICASSP'90: IEEE INTERNATIONAL CONFERENCE ON ACOUSTICS, SPEECH, AND SIGNAL PROCESSING, ALBUQUERQUE, USA, Bd. 1, Nr. CONF. 15, 3. - 6. April 1990, Seiten 165-168, XP000146430 INSTITUTE OF ELECTRICAL AND ELECTRONICS ENGINEERS

## Beschreibung

Die vorliegende Erfindung betrifft ein Verfahren zum Übermitteln von Sprachdaten, wobei die Sprachdaten vor dem Übermitteln komprimiert und am Übertragungsziel wieder dekomprimiert werden. Das Komprimieren beruht dabei auf einem Zerlegen der Sprachdaten in Phoneme. Phoneme sind die für die Wahrnehmung gesprochener Sprache wesentlichen akustischen Sprachelemente.

Es ist bekannt, Sprachdaten vor einem Übermitteln in einem Kommunikationsnetz zu komprimieren, um möglichst wenig Übertragungsbandbreite im Kommunikationsnetz zu belegen. Bei einer Wiedergabe der Sprache am Übermittlungsziel werden in diesen Fällen die komprimierten Sprachdaten durch Dekomprimieren wieder in den Ursprungszustand oder einen dazu gleichwertigen Zustand zurückgeführt. Da sich die durch ein solches Verfahren erzielbare Reduktion der Übertragungsbandbreite direkt nach der Kompressionsrate des verwendeten Komprimierungsverfahrens richtet, ist eine möglichst hohe Kompressionsrate erstrebenswert.

Bei Sprachübermittlung werden üblicherweise Pradiktionsverfahren zum Komprimieren eingesetzt, welche die statistische Ungleichverteilung der in Sprachdaten auftretenden Datenmuster ausnutzen, um eine Sprachdaten eigentümliche, hohe Redundanz zu reduzieren. Beim Dekomprimieren können die ursprünglichen Sprachdaten aus den komprimierten Sprachdaten bis auf geringe, verfahrensinhärente Verluste, nahezu verfälschungsfrei rekonstruiert werden. Die erreichbare Kompressionsrate liegt dabei in der Größenordnung von etwa 1:10. Verfahren dieser Art sind beispielsweise in "Information und Codierung" von Richard W. Hamming, VCH Verlagsgesellschaft Weinheim, 1987, Seiten 81 bis 97 beschrieben.

In typischen Sprachdaten macht eine rein inhaltliche Information nur einen geringen Bruchteil der gesamten Sprachinformation aus. Der größte Teil der Sprachinformation besteht in der Regel aus sprecherspezifischer Information, die sich z.B. in Nuancen der Stimme oder der Stimmlage des Sprechers ausdrückt. Kommt es bei einer Übermittlung von Sprachdaten im wesentlichen nur auf deren inhaltliche Information an, z.B. bei rein informativen Mitteilungen, automatischen Ansagen o.ä., sind daher durch Reduktion der sprecherspezifischen Information auch wesentlich höhere Kompressionsraten möglich als mit Verfahren, die den Informationsgehalt der Sprachdaten vollständig oder nahezu vollständig erhalten.

Die kleinsten akustischen Einheiten, in denen Sprache vom Sprecher formuliert wird und in denen sich auch die inhaltliche Information - die gesprochenen Wörter - ausdrückt, sind Phoneme. Aus den Patentschriften EP 71716 B1, DE 3513243 C2 und EP 423800 B1 sind bereits Anordnungen und Verfahren bekannt, bei denen ein Sprachdatenstrom hinsichtlich der darin enthaltenen Phoneme analysiert und in einen Strom von den erkannten Phonemen jeweils zugeordneten Kodezeichen umgesetzt wird, um die Sprachdaten dadurch vor einem Übermitteln zu komprimieren.

Das Dokument Maeran et al.: "Speech Recognition Through Phoneme Segmentation and Neural Classification", IEEE Instrumentation and Measurement Technology Conference, Ottawa (1997), Seiten 1215-1220, offenbart ein Verfahren zum Übermitteln von Sprachdaten mittels Phonemanalyse unter Verwendung eines Phonemkatalogs an der Sprachdatenquelle; das Verfahren verwendet einen zusätzlichen Katalog mit sprecherspezifischen Phonemen zur Sprachsynthese am Übertragungsziel.

Ein wesentliches Problem besteht dabei darin, die Phoneme, aus welchen sich ein beliebiger zu übermittelnder Sprachdatenstrom zusammensetzt, zuverlässig zu erkennen. Dies wird insbesondere dadurch erschwert, daß dasselbe Phonem je nach Sprecher und dessen Sprachgewohnheit in sehr unterschiedlicher Ausprägung auftreten kann. Werden Phoneme innerhalb des Sprachdatenstroms nicht erkannt oder falschen Lauten zugeordnet, verschlechtert sich die Übertragungsqualität der Sprache - unter Umständen bis zur Unverständlichkeit. Eine verläßliche Phonemanalyse ist daher ein wichtiges Kriterium für die Qualität bzw. die Anwendungsbreite derartiger Sprachübermittlungsverfahren.

Aufgabe der vorliegenden Erfindung ist es, ein flexibles und effizientes Verfahren zum Übermitteln von Sprachdaten anzugeben, bei dem Sprachdaten durch eine verbesserte Phonemanalyse vor dem Übermitteln komprimiert werden können.

Gelöst wird diese Aufgabe erfindungsgemäß durch ein Verfahren mit den Merkmalen des Patentanspruchs 1.

Vorteilhafte Weiterbildungen der Erfindung sind in den Unteransprüchen angegeben.

Bei einem erfindungsgemäßen Verfahren werden von einer Sprachdatenquelle zu einem Übermittlungsziel zu übermittelnde Sprachdaten vor dem eigentlichen Übertragen einer Phonemanalyse unterzogen. Zur Anwendung des Verfahrens können die Sprachdaten in vielerlei Form vorliegen; beispielsweise in analoger oder digitalisierter Form oder als Sprachsignale beschreibende Merkmalsvektoren, jeweils in zeit- und/oder frequenzaufgelöster Darstellung. Die Phonemanalyse wird erfindungsgemäß durch ein neuronales Netz ausgeführt, das auf ein Erkennen von Phonemen trainiert ist. Die Prinzipien einer Sprach- bzw. Phonemerkennung mittels neuronaler Netze sind beispielsweise in "Review of Neutral Networks for Speech Recognition" von R. P. Lippmann in Neural Computation 1, 1989, Seiten 1 bis 38 beschrieben.

Die Phoneme nach denen der Sprachdatenstrom zu analysieren ist und auf die das neuronale Netz trainiert ist, sind in sprach- und/oder sprecherspezifischen Phonemkatalogen hinterlegt, wo ihnen jeweils ein eindeutiges Kodezeichen, z.B. ein Index oder eine Nummer, zugeordnet ist. Als Sprache können in diesem Zusammenhang u.a. Landessprachen, regionale Dialekte und Ausprägungen von Sprachbesonderheiten verstanden werden. Die sprach- bzw. sprecherspezifischen Phonemkataloge können in einem das erfindungsgemäße Verfahren vorbereitenden Schritt durch Analyse von jeweils unterschiedlichen Sprachen angehörenden und/oder von unterschiedlichen Sprechern stammenden, repräsentativen Sprachdaten erstellt werden. Dabei werden diejenigen akustischen Sprachelemente, die sich für die jeweiligen repräsentativen Sprachdaten als charakteristisch erweisen oder eine repräsentative Idealform dieser Sprachelemente, als Phoneme im betreffenden Phonemkatalog hinterlegt. Die Analyse der repräsentativen Sprachdaten kann insbesondere auch mit Hilfe eines neuronalen Netzes durchgeführt werden. Ferner kann die Auswahl von repräsentativen Sprachdaten bzw. deren charakteristischen Sprachelementen vorteilhafterweise Besonderheiten der zu übermittelnden Sprachdaten, wie z.B. Hintergrundgeräuschen o.ä., angepaßt werden.

Ein Phonemkatalog kann beispielsweise als ein konventioneller Speicher und/oder als Teil eines trainierten neuronalen Netzes realisiert sein, wobei im letzten Fall die hinterlegten Phoneme durch einen inneren Zustand des trainierten neuronalen Netzes repräsentiert sein können. Weiterhin kann die den Lernzustand des neuronalen Netzes bestimmende, sogenannte Gewichtsmatrix als Phonemkatalog aufgefaßt werden. Eine solche Gewichtsmatrix kann aus einem trainierten neuronalen Netz ausgelesen, in einem Speicher hinterlegt und bei Bedarf in ein beliebiges neuronales Netz eingelesen werden, das dadurch zu einem entsprechend trainierten neuronalen Netz wird.

Vor der Phonemanalyse der Sprachdaten durch ein neuronales Netz wird zunächst einer der sprach- und/oder sprecherspezifischen Phomenkataloge ausgewählt und die Sprachdaten anschließend dem auf das Erkennen der in dem ausgewählten Phonemkatalog hinterlegten Phoneme trainierten neuronalen Netz zur Phonemanalyse zugeführt. Die Auswahl des Phonemkatalogs kann dabei abhängig von einer Kennung eines die zu übertragenden Sprachdaten sendenden Teilnehmers erfolgen oder von einem sprach- und/oder sprecherunterscheidenden neuronalen Netz veranlaßt werden, das auf ein Erkennen der Sprache, der die zu übertragenden Sprachdaten angehören, und/oder des Sprechers, von dem die zu übertragenden Sprachdaten stammen, trainiert ist.

Für die bei der Phonemanalyse in den Sprachdaten erkannten Phoneme wird das diesen im ausgewählten Phonemkatalog jeweils zugeordnete Kodezeichen ermittelt und anstelle des dem jeweiligen Phonem entsprechenden Sprachdatenmusters zum Übermittlungsziel übertragen. Da die übertragenen Kodezeichen im allgemeinen wesentlich kürzer als die dadurch repräsentierten Sprachdatenmuster sind, wird die zu übertragende Datenmenge im allgemeinen wesentlich reduziert und so eine hohe Kompressionsrate erzielt. Am Übermittlungsziel werden die empfangenen Kodezeichen einer Sprachsyntheseeinrichtung zugeführt, die den Strom der Kodezeichen wieder in eine Abfolge von Phonemen umsetzt und ausgibt. Zum Ersetzen der empfangenen Kodezeichen durch auszugebende Phoneme greift die Sprachsynthesseeinrichtung dabei ebenfalls auf einen Phonemkatalog zu. Die Kompressionsrate kann eventuell noch gesteigert werden, indem der Strom der Kodezeichen vor dessen Übertragung durch Anwendung eines weiteren Komprimierungsverfahrens komprimiert und am Übermittlungsziel vor dem Zuführen zur Sprachsyntheseeinrichtung wieder dekomprimiert wird.

Die Verwendung sprecher- bzw. sprachspezifischer Phonemkataloge erhöht die Zuverlässigkeit der Phonemanalyse und damit auch die Qualität der Sprachsynthese insbesondere bei Übertragung von Sprachdaten, die von verschiedenen Sprechern stammen. Weiterhin kann durch die Wahl des der Sprachsynthese zugrunde liegenden Phonemkatalogs die Wiedergabe der Sprachdaten auch vorgebbaren Erfordernissen angepaßt werden, z.B. um bestimmte Sprecher oder Sprachbesonderheiten zu simulieren oder um durch ein Verändern der Stimme auf besondere Umstände aufmerksam zu machen.

Nach einer vorteilhaften Weiterbindung des erfindugsgemäßen Verfahrens kann ein Phonemkatalog während einer Übermittlung von Sprachdaten durch Analyse dieser konkret zu übermittelnden Sprachdaten - gegebenenfalls mehrmals - aktualisiert werden und/oder das neuronale Netz mittels der zu übermittelnden Sprachdaten weiter trainiert werden. Auf diese Weise kann die Phonemanalyse bzw. die Sprachsynthese auch kurzfristigen Änderungen von Spracheigenheiten angepaßt werden.

Gemäß einer Weiterbildung der Erfindung können Informationen über einen bei der Phonemanalyse verwendeten Phonemkatalog der Sprachsyntheseeinrichtung übermittelt werden. Auf diese Weise ist es beispielsweise möglich, der Sprachsynteseeinrichtung einen Wechsel eines Phonemkataloges, z.B. aufgrund eines Sprecher- oder Sprachwechsels, anzuzeigen oder, falls ein zu verwendender Phonemkatalog dort noch nicht vorliegt, diesen ganz oder teilweise zu übermitteln. Auch Änderungen oder Aktualisierungen von Phonemkatalogen können so der Sprachsyntheseeinrichtung übermittelt und damit verfügbar gemacht werden.

Eine weitere vorteilhafte Weiterbildung der Erfindung sieht vor, daß bei der Sprachsyntheseeinrichtung verschiedene, für die Phonemerzeugung relevante Parameter, wie z.B. die Länge, Lautstärke, Betonung, Stimmlage, Stimme etc. mit der Phoneme wiedergegeben bzw. ausgegeben werden, einstellbar sind; vorzugsweise für jedes einzelne Phonem. Die Wiedergabe der übermittelten Sprachdaten kann so unterschiedlichen Erfordernissen angepaßt werden. Beispielsweise kann die Wiedergabequalität i.a. verbessert werden, indem Laut- und/oder Stimmbesonderheiten, wie z.B. die Lautstärke und Tonhöhe von Silben oder ähnlicher Sprachelemente, vor dem Komprimieren aus den zu übermittelnden Sprachdaten extrahiert und der Sprachsyntheseeinrichtung zum Einstellen von Wiedergabeparametern übermittelt werden. Die Wiedergabeparameter können auch abhängig von einer Kennung eines die Sprachdatenen sendenden Teilnehmers eingestellt werden, um in die Sprachwiedergabe teilnehmerspezifische Elemente einfließen zu lassen, die z.B. den Teilnehmer anhand der wiedergegebenen Stimme identifizierbar machen können.

Weiterhin besteht die Möglichkeit, die von der Sprachdatenquelle zum Übermittlungsziel zu übermittelnden Sprachdaten als Kodezeichen in einem Speicher zwischenzuspeichern, um sie später ein oder mehrmals abzurufen. Durch die Reduzierung der Sprachdaten auf die Phoneme repräsentierenden Kodezeichen wird hierfür in der Regel wesentlich weniger Speichplatz benötigt als für ein Zwischenspeichern der unveränderten Sprachdaten.

Die Phoneme repräsentierenden Kodezeichen bilden darüber hinaus einen möglichen Ausgangspunkt für eine vielfältige Weiterverarbeitung der Sprachdaten. Beispielsweise können die Kodezeichen in den zugeordneten Phonemen entsprechende Buchstabengruppen umgesetzt werden und so die Sprachdaten als Text ausgegeben werden. Auch viele zeitgemäße Verfahren zur automatischen Spracherkennung beruhen auf einem Zerlegen der Sprache in Phoneme und können daher direkt mit dem erfindungsgemäßen Verfahren kombiniert werden.

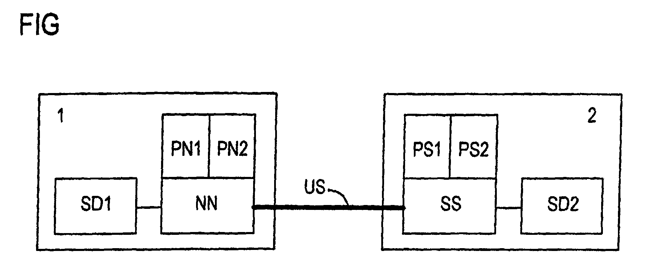

Die Erfindung wird nachfolgend anhand eines bevorzugten Ausführungsbeispiels unter Bezugnahme auf die Figur näher erläutert.
Die Figur zeigt in schematischer Darstellung zwei über eine Übertragungsstrecke verbundene Kommunikationsanlagen.

In der Figur ist eine als Sender von Sprachdaten fungierende Kommunikationsanlage 1 und eine damit über eine Übertragungsstrecke US verbundene, als Empfänger der Sprachdaten fungierende Kommunikationsanlage 2 schematisch dargestellt. Die Kommunikationsanlage 1 enthält als Funktionskomponenten eine Sprachdatenquelle SD1 und ein daran angeschlossenes neuronales Netz NN mit Zugriff auf sprecherspezifische Phonemkataloge PN1 und PN2. In der Kommunikationsanlage 2 sind eine an sprecherspezifische Phonemkataloge PS1 und PS2 gekoppelte Sprachsytheseeinrichtung SS und eine daran angeschlossene Sprachdatensenke SD2 dargestellt.

Die Beschränkung auf zwei sprecherspezifische Phonemkataloge je Kommunikationsanlage ist hier lediglich als beispielhaft anzusehen und dient der Vereinfachung der nachfolgenden Erläuterung.

In den sprecherspezifischen Phonemkatalogen PN1 und PN2 sind jeweils Phoneme hinterlegt, die durch Analyse repräsentativer Sprachdaten als charakteristische akustische Sprachelemente erkannt wurden. Die zur Erstellung der Phonemkataloge PN1, PN2 verwendeten repräsentativen Sprachdaten stammen dabei für jeden Phonemkatalog von einem spezifischen Sprecher. Den hinterlegten Phonemen ist jeweils ein für den betreffenden Phonemkatalog eindeutiges, abrufbares Kodezeichen zugeordnet.

Das neuronale Netz NN ist auf ein Erkennen der in den Phonemkatalogen PN1, PN2 hinterlegten Phoneme innerhalb eines Sprachdatenstroms trainiert, wobei einstellbar ist, welcher der Phonemkataloge PN1, PN2 bei dieser Phonemanalyse zugrundezulegen ist. Diese Einstellung kann beispielsweise dadurch erfolgen, daß dem neuronalen Netz eine dem jeweiligen Phonemkatalog PN1 bzw. PN2 entsprechende, sogenannte Gewichtsmatrix aufgeprägt wird.

Im Ausführungsbeispiel ist ein von der Sprachdatenquelle SD1 ausgehender Sprachdatenstrom von der Kommunikationsanlage 1 zur Sprachdatensenke SD2 in der Kommunikationsanlage 2 zu übermitteln, wobei die Sprachdaten vor der eigentlichen Übertragung zu komprimieren sind. Dazu wird von der Sprachdatenquelle SD1 zunächst eine Kennung eines die Sprachdaten sendenden Teilnehmers dem neuronalen Netz NN zugeführt, das abhängig von der übermittelten Kennung, einen diesem Teilnehmer zugeordneten sprecherspezifischen Phonemkatalog - hier PN1 - für die nachfolgende Phonemanalyse auswählt. Die Kennung wird daraufhin an die Kommunikationsanlage 2 weiterübermittelt.

Anschließend wird der zu übermittelnde Sprachdatenstrom dem neuronalen Netz NN zugeführt, das im Sprachdatenstrom auftretende Sprachdatenmuster nach den im ausgewählten Phonemkatalog PN1 hinterlegten Phonemen klassifiziert. Für jedes Sprachdatenmuster, das erfolgreich einem hinterlegten Phonem zugeordnet werden kann, wird anstelle des Sprachdatenmusters das dem hinterlegten Phonem im Phonemkatalog zugeordnete Kodezeichen über die Übertragungsstrecke US zur Kommunikationsanlage 2 übertragen. Sprachdatenmuster, die nicht erfolgreich einem hinterlegten Phonem zugeordnet werden können, werden - durch ein mit den Phonemen zugeordneten Kodezeichen nicht übereinstimmendes, spezielles Kodezeichen gekennzeichnet - unverändert übertragen.

In der Kommunikationsanlage 2 wird zunächst, abhängig von der übermittelten Kennung, ein der nachfolgenden Sprachsynthese zugrundezulegender Phomenkatalog - hier PS1 - ausgewählt. Der nachfolgend empfangene Strom von Kodezeichen wird sodann der Sprachsyntheseeinrichtung SS zugeführt, die für jedes Kodezeichen das diesem im ausgewählten Phonemkatalog PS1 zugeordnete Phonem erzeugt und der Sprachdatensenke SD2 zuleitet. Die durch das spezielle Kodezeichen gekennzeichneten, unverändert übertragenen Sprachdatenmuster werden direkt zur Sprachdatensenke SD2 weitergeleitet. Auf diese Weise wird der Sprachdatenstrom wieder annähernd rekonstruiert bzw. dekomprimiert.

Die Phonemkataloge PS1 und PS2 sind im Ausführungsbeispiel als konventionelle Speicher realisiert, in denen jedem enthaltenen Kodezeichen, eine zum Erzeugen des zugeordneten Phonems in der Sprachsyntheseeinrichtung SS erforderliche Information zugeordnet ist. Die Phonemkataloge PS1 und PS2 können durch Abrufen bzw. Auslesen der Phonemkataloge PN1 bzw. PN2 erstellt werden.

## Patentansprüche

1. Verfahren zum Übermitteln von Sprachdaten von einer Sprachdatenquelle (SD1) zu einem Übermittlungsziel (SD2) unter Verwendung sprach- und/oder sprecherspezifischer Phonemkataloge (PN1, PN2, PS1, PS2), in welchen Phonemen entsprechende Sprachdatenmuster hinterlegt sind, und jedem Phonem jeweils ein eindeutiges Kodezeichen zugeordnet ist, mit folgenden Schritten:
a) abhängig von einer Kennung eines die Sprachdaten sendenden Teilnehmers wird ein diesem Teilnehmer zugeordneter sprecher- und/oder sprachspezifischer Phonemkatalog (PN1) ausgewählt,
b) die zu übermittelnden Sprachdaten werden einem auf das Erkennen der im ausgewählten Phonemkatalog (PN1) hinterlegten Phoneme trainierten neuronalen Netz (NN) zugeführt, das die Sprachdaten hinsichtlich der in diesen enthaltenen Phoneme analysiert,
c) für die in den Sprachdaten erkannten Phoneme wird das diesen im ausgewählten Phonemkatalog (PN1) jeweils zugeordnete Kodezeichen bestimmt,
d) die Kodezeichen werden zu einer Sprachsyntheseeinrichtung (SS) am Übermittlungsziel (SD2) übertragen,
e) der Strom empfangener Kodezeichen wird durch die Sprachsyntheseeinrichtung (SS) in eine Abfolge von den Kodezeichen in einem Phonemkatalog (PS1) jeweils zugeordneten Phonemen umgesetzt, und
f) diese Abfolge wird ausgegeben.

2. Verfahren zum Übermitteln von Sprachdaten von einer Sprachdatenquelle (SD1) zu einem Übermittlungsziel (SD2) unter Verwendung sprach- und/oder sprecherspezifischer Phonemkataloge (PN1, PN2, PS1, PS2), in welchen Phonemen entsprechende Sprachdatenmuster hinterlegt sind und jedem Phonem jeweils ein eindeutiges Kodezeichen zugeordnet ist, mit folgenden Schritten:
a) die zu Übermittelnden Sprachdaten werden einem auf das Erkennen verschiedener Sprachen und/oder Sprecher trainierten neuronalen Netz zugeführt, das eine Sprache, der die zu übermittelnden Sprachdaten angehören, und/oder einen Sprecher, von dem die zu ubermittelnden Sprachdaten stammen, erkennt und ein Auswählen eines dieser Sprache und/oder diesem Sprecher zugeordneten, sprach- und/oder sprecherspezifischen Phonemkatalogs (PN1) veranlaßt,
b) die zu übermittelnden Sprachdaten werden einem auf das Erkennen der im ausgewählten Phonemkatalog (PN1) hinterlegten Phoneme trainierten neuronalen Netz (NN) zugeführt, das die Sprachdaten hinsichtlich der in diesen enthaltenen Phoneme analysiert und auf das Erkennen der zu übermittelnden Sprachdaten trainiert wird,
c) für die in den Sprachdaten erkannten Phoneme wird das diesen im ausgewählten Phonemkatalog (PN1) jeweils zugeordnete Kodezeichen bestimmt,
d) die Kodezeichen werden zu einer Sprachsyntheseeinrichtung (SS) am Übermittlungsziel (SD2) übertragen,
e) der Strom empfangener Kodezeichen wird durch die Sprachsyntheseeinrichtung (SS) in eine Abfolge von den Kodezeichen in einem Phonemkatalog (PS1) jeweils zugeordneten Phonemen umgesetzt, und
f) diese Abfolge wird ausgegeben.

3. Verfahren nach Anspruch 1 oder 2,
**dadurch gekennzeichnet,**
**daß** die von der Sprachdatenquelle (SD1) zum Übermittlungsziel (SD2) zu übermittelnden Sprachdaten als Kodezeichen in einem Speicher zwischengespeichert werden.

4. Verfahren nach einem der vorhergehenden Ansprüche,
**dadurch gekennzeichnet,**
**daß** Informationen über einen bei der Phonemanalyse der zu übermittelnden Sprachdaten benutzten Phonemkatalog (PN1) der Sprachsyntheseeinrichtung (SS) am Übermittlungsziel (SD2) übermittelt werden, um dort für eine Rekonstruktion der übermittelten Sprachdaten verwendet zu werden.

5. Verfahren nach einem der vorhergehenden Ansprüche,
**dadurch gekennzeichnet,**
**daß** ein Phonemkatalog (PN1, PN2, PS1, PS2) während einer Sprachübermittlung unter Verwendung der zu übermittelnden Sprachdaten aktualisiert wird.

6. Verfahren nach einem der vorhergehenden Ansprüche,
**dadurch gekennzeichnet,**
**daß** das neuronale Netz (NN) während einer Sprachübertragung auf das Erkennen der zu übermittelnden Sprachdaten trainiert wird.

7. Verfahren nach einem der vorhergehenden Ansprüche,
**dadurch gekennzeichnet,**
**daß** der Strom der zu übertragenden Kodezeichen vor der Übertragung durch Anwendung eines weiteren Komprimierungsverfahrens komprimiert und am Übermittlungsziel (SD2) wieder dekomprimiert wird.

8. Verfahren nach einem der vorhergehenden Ansprüche,
**dadurch gekennzeichnet,**
**daß** die Sprachsyntheseeinrichtung (SS) die Phoneme mit einstellbarer Länge, Lautstärke, Betonung, Stimmlage und/oder Stimme ausgibt.

9. Verfahren nach Anspruch 8,
**dadurch gekennzeichnet,**
**daß** Laut- und/oder Stimmbesonderheiten vor dem Komprimieren aus den zu übermittelnden Sprachdaten extrahiert und der Sprachsyntheseeinrichtung (SS) übermittelt werden, um dort zum Einstellen der Länge, Lautstärke, Betonung, Stimmlage und/oder Stimme mit der die Phoneme ausgegeben werden, verwendet zu werden.

10. Verfahren nach Anspruch 8 oder 9,
**dadurch gekennzeichnet,**
**daß** die Kennung des die Sprachdaten sendenden Teilnehmers der Sprachsyntheseeinrichtung (SS) übermittelt wird, und dort die Länge, Lautstärke, Betonung, Stimmlage und/oder Stimme mit der die Phoneme ausgegeben werden, abhängig von der Kennung eingestellt wird.

## Claims

1. Method for transmitting voice data from a voice data source (SD1) to a transmission destination (SD2) using voice-specific and/or speaker-specific phoneme catalogues (PN1, PN2, PS1, PS2) in which voice data patterns corresponding to phonemes are stored, and each phoneme is respectively assigned an unambiguous code symbol, having the following steps:
a) as a function of an identifier of a subscriber transmitting the voice data, a speaker-specific and/or voice-specific phoneme catalogue (PN1) which is assigned to this subscriber is selected,
b) the voice data which are to be transmitted are fed to a neural network (NN) which is trained to detect the phonemes stored in the selected phoneme catalogue (PN1) and which analyses the voice data for the phonemes contained in them,
c) for the phonemes detected in the voice data, the code symbol which is respectively assigned to said phonemes in the selected phoneme catalogue (PN1) is determined,
d) the code symbols are transmitted to a voice synthesizer (SS) at the transmission destination (SD2),
e) the stream of received code symbols is converted by the voice synthesizer (SS) into a sequence of phonemes which are respectively assigned to the code symbols in a phoneme catalogue (PS1), and
f) this sequence is output.

2. Method for transmitting voice data from a voice data source (SD1) to a transmission destination (SD2) using voice-specific and/or speaker-specific phoneme catalogues (PN1, PN2, PS1, PS2) in which voice data patterns corresponding to phonemes are stored, and each phoneme is respectively assigned an unambiguous code symbol, having the following steps:
a) the voice data to be transmitted are fed to a neural network which is trained to detect various languages and/or speakers and which detects a language to which the voice data to be transmitted belong and/or a speaker from which the voice data to be transmitted originate and causes a voice-specific and/or speaker-specific phoneme catalogue (PN1) which is assigned to this language and/or this speaker to be selected,
b) the voice data which are to be transmitted are fed to a neural network (NN) which is trained to detect the phonemes stored in the phoneme catalogue (PN1) and which analyses the voice data for the phonemes contained in them and is trained to detect the voice data which are to be transmitted,
c) for the phonemes detected in the voice data, the code symbol which is respectively assigned to said phonemes in the selected phoneme catalogue (PN1) is determined,
d) the code symbols are transmitted to a voice synthesizer (SS) at the transmission destination (SD2),
e) the stream of received code symbols is converted by the voice synthesizer (SS) into a sequence of phonemes which are respectively assigned to the code symbols in a phoneme catalogue (PS1), and
f) this sequence is output.

3. Method according to Claim 1 or 2, **characterized in that** the voice data which are to be transmitted from the voice data source (SD1) to the transmission destination (SD2) are buffered as code symbols in a memory.

4. Method according to one of the preceding claims, **characterized in that** information relating to a phoneme catalogue (PN1) which is used in the phoneme analysis of the voice data which are to be transmitted is transmitted to the voice synthesizer (SS) at the transmission destination (SD2) in order to be used there to reconstruct the transmitted voice data.

5. Method according to one of the preceding claims, **characterized in that** a phoneme catalogue (PN1, PN2, PS1, PS2) is updated during a voice transmission by using the voice data which are to be transmitted.

6. Method according to one of the preceding claims, **characterized in that** the neural network (NN) is trained during a voice transmission to detect the voice data which are to be transmitted.

7. Method according to one of the preceding claims, **characterized in that** the stream of code symbols which are to be transmitted is compressed before the transmission by using a further compression method and decompressed again at the transmission destination (SD2).

8. Method according to one of the preceding claims, **characterized in that** the voice synthesizer (SS) outputs the phonemes with adjustable length, volume, intonation, register and/or speaker's voice.

9. Method according to Claim 8, **characterized in that**, before the compression, sound and/or peculiarities of the speaker's voice are extracted from the voice data which are to be transmitted and transmitted to the voice synthesizer (SS) in order to be used there to set the length, volume, intonation, register and/or speaker's voice with which the phonemes are output.

10. Method according to Claim 8 or 9, **characterized in that** the identifier of the subscriber transmitting the voice data is transmitted to the voice synthesizer (SS) and the length, volume, intonation, register and/or speaker's voice with which the phonemes are output is/are set as a function of the identifier.

## Revendications

1. Procédé pour la transmission de données vocales d'une source de données vocales (SD1) vers un lieu de destination (SD2), par l'utilisation de catalogues de phonèmes (PN1, PN2, PS1, PS2) spécifiques au langage et/ou au locuteur, dans lesquels des modèles de données vocales correspondant à des phonèmes sont mémorisés et un signe codé indubitable est respectivement affecté à chaque phonème, comprenant les étapes suivantes :
a) en fonction d'une identification d'un abonné émettant les données vocales, un catalogue de phonèmes (PN1) spécifique au locuteur et/ou au langage affecté à cet abonné est sélectionné,
b) les données vocales qui doivent être transmises sont transférées à un réseau neuronal (NN) entraîné pour l'identification des phonèmes mémorisés dans le catalogue de phonèmes sélectionné (PN1), qui analyse les données vocales au niveau des phonèmes qu'elles contiennent,
c) pour les phonèmes identifiés dans les données vocales, le signe codé qui leur a été respectivement affecté dans le catalogue de phonèmes sélectionné (PN1) est déterminé,
d) les signes codés sont transmis à un dispositif de synthèse de la parole (SS) au lieu de destination (SD2),
e) le flux des signes codés réceptionnés est converti par le système de synthèse de la parole (SS) en une série de phonèmes respectivement affectés aux signes codés dans un catalogue de phonèmes (PS1) et
f) cette série est éditée.

2. Procédé pour la transmission de données vocales d'une source de données vocales (SD1) vers un lieu de destination (SD2), par l'utilisation de catalogues de phonèmes (PN1, PN2, PS1, PS2) spécifiques au langage et/ou au locuteur, dans lesquels des modèles de données vocales correspondant à des phonèmes sont mémorisés et un signe codé indubitable est respectivement affecté à chaque phonème, comprenant les étapes suivantes :
a) les données vocales qui doivent être transmises sont transférées à un réseau neuronal entraîné pour l'identification de différents langages et/ou locuteurs, qui identifie un langage duquel font partie les données vocales qui doivent être transmises et/ou un locuteur duquel émanent les données vocales qui doivent être transmises, et qui déclenche une sélection d'un catalogue de phonèmes spécifique au langage et/ou au locuteur (PN1) affecté à ce langage et/ou à ce locuteur,
b) les données vocales qui doivent être transmises sont transférées à un réseau neuronal (NN) entraîné pour l'identification des phonèmes mémorisés dans le catalogue de phonèmes sélectionné (PN1), qui analyse les données vocales au niveau des phonèmes qu'elles contiennent et qui est entraîné pour l'identification des données vocales qui doivent être transmises,
c) pour les phonèmes identifiés dans les données vocales, le signe codé affecté à ces derniers dans le catalogue de phonèmes sélectionné (PN1) est déterminé,
d) les signes codés sont transmis à un dispositif de synthèse de la parole (SS), au lieu de destination (SD2),
e) le flux de signes codés réceptionnés est converti par le dispositif de synthèse de la parole (SS) en une série de phonèmes respectivement affectés aux signes codés dans un catalogue de phonèmes (PS1) et
f) cette série est éditée.

3. Procédé selon l'une quelconque des revendications 1 ou 2,
**caractérisé en ce que** les données vocales qui doivent être transmises de la source de données (SD1) vers le lieu de destination (SD2) font l'objet d'une mémorisation intermédiaire dans une mémoire, sous forme de signes codés.

4. Procédé selon l'une quelconque des revendications précédentes,
**caractérisé en ce que** des informations concernant l'un des catalogues de phonèmes (PN1) utilisé lors de l'analyse des phonèmes des données vocales qui doivent être transmises sont transférées au dispositif de synthèse de la parole (SS), au lieu de destination (SD2), pour y être utilisées pour une reconstruction des données vocales transmises.

5. Procédé selon l'une quelconque des revendications précédentes,
**caractérisé en ce qu'**au cours d'une transmission de la parole, un catalogue de phonèmes (PN1, PN2, PS1, PS2) est mis à jour, par l'utilisation des données vocales qui doivent être transmises.

6. Procédé selon l'une quelconque des revendications précédentes,
**caractérisé en ce qu'**au cours d'un cycle de transmission de la parole, le réseau neuronal (NN) est entraîné pour l'identification des données vocales qui doivent être transmises.

7. Procédé selon l'une quelconque des revendications précédentes,
**caractérisé en ce que** le flux de signes codés qui doivent être transmis est compressé avant la transmission, par l'utilisation d'un autre procédé de compression et **en ce qu'**il est à nouveau décompressé au lieu de destination (SD2).

8. Procédé selon l'une quelconque des revendications précédentes,
**caractérisé en ce que** le dispositif de synthèse de la parole (SS) édite les phonèmes avec une longueur, un volume, une intonation, un registre et/ou une voix réglables.

9. Procédé selon la revendication 8,
**caractérisé en ce que** les particularités inhérentes à la tonalité et/ ou à la voix sont extraites des données vocales qui doivent être transmises avant la compression de ces dernières et **en ce qu'**elles sont transmises au dispositif de synthèse de la parole (SS), pour y être utilisées pour le réglage de la longueur, du volume, de l'intonation, du registre et/ou de la voix avec lesquels les phonèmes seront édités.

10. Procédé selon l'une quelconque des revendications 8 ou 9,
**caractérisé en ce que** l'identification de l'abonné qui émet les données vocales est transférée au dispositif de synthèse de la parole (SS) dans lequel la longueur, le volume, l'intonation, le registre et/ou la voix avec lesquels les phonèmes sont édités sont réglés en fonction de l'identification.
